# NEW EUROPEAN PATENT SPECIFICATION

(11) **EP 0 849 333 B2**
(45) Date of publication and mention of the opposition decision: **10.11.2004**
(45) Mention of the grant of the patent: 18.04.2001
(21) Application number: 97310253.6
(22) Date of filing: 16.12.1997
(51) Int. Cl.: C08L 83/10, C08K 3/36, C08K 3/04, C08G 77/442, C08C 19/44

(54) **Rubber composition for a tyre tread**
Kautschukmischung für Reifenlauffläche
Composition de caoutchouc pour bande de roulement

(30) Priority: 17.12.1996 JP 33678796
(43) Date of publication of application: 24.06.1998
(73) Proprietor: SUMITOMO RUBBER INDUSTRIES LIMITED, Kobe-shi, Hyogo-ken (JP)
(72) Inventor: Matsuo, Toshiro, Kakogawa-shi, Hyogo-ken (JP); Saba, Hayato, Ichihara-shi, Chiba-ken (JP)
(74) Representative: Manitz, Finsterwald & Partner

(56) References cited:
- EP-A- 0 520 279
- EP-A- 0 661 298
- US-A- 3 244 664
- US-A- 5 409 969
- PATENT ABSTRACTS OF JAPAN vol. 097, no. 008, 29 August 1997 & JP 09 110904 A (SUMITOMO CHEM CO LTD), 28 April 1997,

## Description

The present invention relates to a rubber composition for a tyre tread.

For aspects of environment and resources, low fuel consumption (low rolling resistance) is strongly desired for tyre of automobiles. Further good wet-skid resistance is required form the viewpoint of safety and superior wear resistance is required from the viewpoint of durability.

When the carbon black content of a rubber composition for a tyre is increased to improve wear resistance, the value of tan δ (70°C) becomes large and the rolling resistance is also increased. Therefore, it is well known to employ silica instead of carbon black.

In such a case, it is also well known that a silane coupling agent is employed to give good reinforcement by improving the bonding ability (reactivity) between the silica and rubber components of the rubber composition.

However, there is a problem as silane coupling agent is expensive which makes the cost of tyres higher with increasing amounts of silane.

There is disclosed, for example, in JP-B-80503/1993 a teaching that reinforcement can be obtained by reacting an alkoxysilane which is an organic silicon compound with an end or ends of a polymer molecule of rubber components in a rubber composition to chemically bond the alkoxysilane with silica.

According to the prior technology described in the publication, though reinforcement of the resulting rubber composition is improved, there arises a problem in that it is also necessary to add a silane coupling agent because processability of the rubber composition is inadequate in the non-vulcanised state. Further the publication is silent on compatibility between low rolling resistance and high wet-skid resistance.

Considering the above-mentioned facts, an object of the present invention is to provide a rubber composition for a tyre tread which is superior in processability and has both low rolling resistance and high wet-skid resistance.

Accordingly the present invention provides a rubber composition for a tyre tread which comprises
(1) 100 parts by weight of an organosiloxane-modified diene polymer or a blend of the organosiloxane-modified diene polymer with another diene polymer;
(2) 30 to 90 parts by weight of a silica or a mixture of the silica and 0 to 40 parts by weight of carbon black, wherein a weight ratio of the carbon black to the silica is not higher than 1.0; and
(3) a silane coupling agent in an amount of 5 to 15% by weight of the silica, wherein the silane coupling agent is bis-((triethoxy)silylpropyl)tetrasulfide or γ-mercaptopropyltrimethoxysilane,
said organosiloxane-modified diene polymer being obtained by:
(a) polymerising a diene monomer alone or a mixture of the diene monomer and an aromatic vinyl monomer by the use of an alkali metal-containing polymerisation initiator in a hydrocarbon solvent to give a diene polymer having an alkali metal-containing active end, and
(b) reacting the alkali metal-containing active end of the diene polymer with an organosiloxane having at least one functional group selected from the group consisting of epoxy, alkoxyl, carbonyl, vinyl, chloro, bromo and iodo groups,
wherein the organosiloxane is represented by the general formula (I) 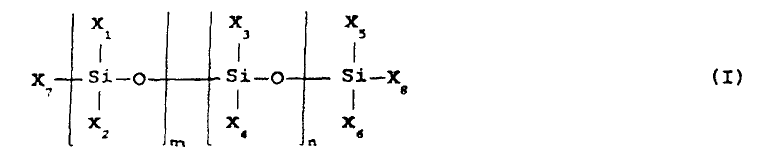 wherein X₁ to X₈ are the same or different and each is an alkoxy, vinyl, chloro, bromo or iodo group, a hydrocarbon residue having at least one of these groups, a hydrocarbon residue having an epoxy group, a hydrocarbon residue having a carbonyl, hydrogen atom, an alkyl or phenyl group, and each of m and n is an integer of 0 to 100, provided that m and n are not zero at the same time.

In the present invention, firstly a diene monomer alone or a mixture of the diene monomer and aromatic vinyl monomer is polymerised in a hydrocarbon solvent by the use of an alkali metal-containing polymerisation initiator to give a diene polymer (hereinafter referred to as "diene polymer A") having an alkali metal-containing active end.

Then, the alkali metal-containing active end of the diene polymer A is reacted with an organosiloxane having at least one functional group selected from the group consisting of epoxy, an alkoxy, carbonyl, vinyl, chlorine atom, bromine atom and iodine atom to give an organosiloxane-modified diene polymer. In the organosiloxane-modified diene polymer, the organosiloxane is chemically bonded with the alkali metal-containing active end portion. It is believed that the above-mentioned functional group of the organosiloxane is chemically bonded with or has chemical affinity to a functional group such as silanol or siloxane on the surface of the silica.

Through such a mechanism (interaction), the rubber composition of the present invention has good reinforcement and superior processability in the non-vulcanised state.
The diene monomer may be a conjugate diene monomer. Examples of diene monomer are, for instance, butadiene, isoprene, 1,3-pentadiene (piperylene), 2,3-dimethyl-1,3-butadiene or 1,3-hexadiene, from the viewpoints of general use and low cost. Among them, butadiene is preferable from the viewpoints of low cost and easy production.

The aromatic vinyl monomer which is polymerised with the diene monomer may be an aromatic vinyl monomer which is soluble in an organic solvent. Examples of aromatic vinyl monomer are, for instance, styrene, α-methylstyrene, vinyltoluene, vinylnaphthalene, divinylbenzene or divinylnaphthalene.

The amount of the diene monomer to the aromatic vinyl monomer is preferably 95/5 to 55/45 by weight, and more preferably 90/10 to 60/40.

The alkali metal-containing polymerisation initiator employed in the present invention can initiate polymerisation of the diene monomer alone or copolymerisation of the diene monomer and aromatic vinyl monomer, and provide a resulting polymer with alkali metal-containing active end. Examples of the alkali metal-containing polymerisation initiator are, for instance, an organic lithium-containing catalyst such as an alkyllithium, an alkenyllithium or an alkylenedilithium from the viewpoint that those are generally available, and inexpensive, and chemically stable during polymerlsation.

In the present invention, either the polymerisation of the diene monomer or the copolymerisation of the diene monomer and aromatic vinyl monomer can be carried out by the use of the alkali metal-containing polymerisation initiator in a conventional manner. The polymerisation temperature is preferably 0° to 150°C from the viewpoints of economy and less side reaction, and more preferably is in the range of 30 to 80°C.

The hydrocarbon solvent in the present invention may be a solvent usually employed for polymerising a monomer. Examples of the solvent are, for instance, an aromatic hydrocarbon such as benzene, toluene, xylene or ethylbenzene; an aliphatic hydrocarbon such as cyclopentane, cyclohexane or methylcyclohexane.

A weight average molecular weight (Mw) of the resulting diene polymer A to a number average molecular weight (Mn) of the diene polymer A, i.e. Mw/Mn may be preferably 1.2 to 3.0, further preferably 1.5 to 2.4, so that the rolling resistance is decreased.

Subsequently, according to the present invention, an organosiloxane is reacted with the diene polymer A having the alkali metal-containing active end. The organosiloxane chemically reacts with the diene polymer A having the alkali metal-containing active end to produce an organosiloxane-modified diene polymer. Also, through its functional groups, the organosiloxane is chemically bonded with silica in the rubber composition. From the viewpoints of decrease in rolling resistance and increase in wet-skid resistance, an organosiloxane represented by the general formula (I) is employed: 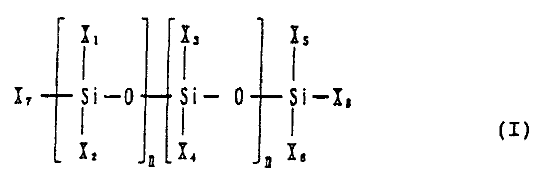 wherein X₁ to X₈ are the same or different and each is an alkoxy, vinyl, chlorine atom, bromine atom, iodine atom, a hydrocarbon residue having at least one thereof, a hydrocarbon residue having epoxy, a hydrocarbon reside having carbonyl, hydrogen atom, an alkyl or phenyl, each of m and n is an integer of 0 to 100, provided that m and n are not zero at the same time. In addition, from the viewpoints of increase in rate of vulcanising and mechanical strength of the vulcanised rubber composition and improvement in kneading/mixing processability, each of m and n is preferably an integer of 1 to 50, more preferably an integer of 2 to 10.

Examples of the organosiloxane represented by the formula (I) are, for instance, diglycidoxypolydimethylsiloxane, dimethyl(methoxy-ethylsitoxane)polydimethylsiloxane, dimethyl(acetoxy-ethylsiloxane)polydimethylsiloxane, diglycidylpolysiloxane or dichloropolydimethylsiloxane.

When the organosiloxane is reached with the diene polymer A having the alkali metal-containing active end, the organosiloxane is added to the diene polymer A in the organic solvent. At the time of the addition, the organosiloxane has 4 to 50 of the above-mentioned functional group, further preferably 4 to 20 so that the viscosity of the mixture does not increase too much and processability is not decreased.

In the present invention, the reaction of the organosiloxane with the diene polymer A proceeds rapidly, and the reaction temperature and the reaction time can be varied in broad ranges. Preferably, the reaction is carried out at room temperature to 100°C for several seconds to several hours, more preferably at 30° to 80°C for 5 minutes to one hour. The reaction can be carried out by bringing the organosiloxane into contact with the diene polymer A in an organic solvent. For example, the organosiloxane may be added into the solution of the diene polymer A having the alkali metal-containing active end obtained by using the alkali metal-containing polymerisation initiator in the hydrocarbon solvent.

The other diene polymer (hereinafter referred to as "diene polymer B") which is mixed with the organosiloxane-modified diene polymer in the present invention may be a diene polymer conventionally employed in the field of tyres. Examples of diene polymer B are, for instance, natural rubber (NR), isoprene rubber (IR), styrene/butadiene rubber (SBR), ethylene/propylene/dione rubber (EPDM), butyl rubber (IIR), styrene/isoprene rubber (SIR) and isoprene/butadiene rubber (IBR). Each of the diene polymers B can be employed alone or in option combination. It is preferable to employ NR, SBR, IR from the viewpoints of general use and low cost. It is further preferable to employ NR, SBR from the viewpoints of good rolling resistance and processability. With respect to SBR, it is preferable to employ a solution polymerised SBR from the viewpoint of good balance between rolling resistance and wet-skid resistance.

The organosiloxane-modified dione polymer may be employed alone. When the diene polymer B is blended with the organosiloxane-modified diene polymer, the mixing percentage of the organosiloxane-modified diene polymer in the blend is preferably 50 to 20% by weight from the viewpoints of good processability and wear resistance.

The mixing in this step can be carried out in the conventional manner.

The silica of the present invention can be a silica employed conventionally in the field of tyres. The average particle size of the silica is preferably 10 to 50 nm from the viewpoints of good dispersibility of the silica and the wear resistance of the resulting composition. More preferably it is 15 to 30 nm from the viewpoint of a good balance between wet-skid resistance and rolling resistance.

In the present invention, the carbon black, which can be mixed in addition to the silica, may be a conventional carbon black such as acetylene black or furnace black which is employed in the field of tyres. The average particle size of the carbon black is preferably 15 to 40 nm from the viewpoints of good dispersibility of the carbon black and wear resistance of the resulting composition. More preferably it is 16 to 28 nm from a viewpoint of good wet-skid resistance.

Basically, the rubber composition of the present invention Is obtained by mixing the silica or a mixture of the silica and carbon black with the organosiloxane-modified diene polymer or a mixture of the organosiloxane-modified diene polymer and diene polymer B. From the viewpoint of a good balance between wet-skid resistance and rolling resistance, the rubber composition of the present invention is obtained by admixing the silica in an amount of 30 to 90 parts by weight and the carbon black in an amount of 0 to 40 parts by weight to 100 parts by weight of the organosiloxane-modified diene polymer or the blend. Further, from the viewpoint of improvement in wet-skid resistance, 30 to 80 parts by weight of the silica and 10 to 30 parts by weight of the carbon black are preferably admixed.

For the method of the mixing in this step, it is preferable that the silica is mixed with the organosiloxane-modified diene polymer or the blend to give a first mixture and, then, the carbon black is admixed with the mixture.

Also, in order to further improve processability of the rubber composition, before reacting the organosiloxane with the diene polymer A, a coupling agent having 3 to 4 functional groups may be added and reacted with a polymer chain of the diene polymer A at its successively polymerisable growth end to branch the diene polymer A partially.

The coupling agent has preferably 3 to 4 functional groups from the viewpoint of improvement of flow resistance of the composition. Examples of coupling agent are, for instance, tin tetrachloride, silicon tetrachloride, silicon tetrabromide, silicon tetraiodide, germanium tetrachloride, methyltrichlorosilane, butyltrichlorotin, bistrichlorosilylethane, trichloroethane, bis((triethoxy)-silylpropyl)tetrasulfide, γ-mercaptopropyltrimethoxysilane and vinyltriethoxysilane. Among them, silicon tetrachloride and tin tetrachloride are preferable from the viewpoitn of commercial availability. Also, fom the viewpoints of igh reinforcement and good rolling resistance, bis((triethoxy)silylpropyl)tetrasulfide, γ-mercaptopropyltrimethoxysilane and vinyltriethoxysilane are further preferable.

The silane coupling agent is used for bonding the silica with the organosiloxane-modified polymer chemically and improving the wear resistance of the resulting composition. Preferable amounts of the silane coupling agent are 7 to 13% by weight of the silica from the viewpoint of a good balance between wear resistance and rolling resistance.

Into the rubber composition for the tyre tread of the present invention, in addition to the above-mentioned components, components usually added in the field of tyre, e.g. a vulcanising agent such as sulfur, vulcanisation accelerator, process oil, antioxidant and vulcanisation assistant can be mixed optionally in a range not to decrease the effect of the present invention.

For the method of mixing in this step, it is preferable that the organosiloxane-modified polymer or the blend, the silica and the coupling agent are mixed first to obtain a mixture and, then, the carbon black, process oil and, further, antioxidant, vulcanisation assistant, vulcanising agent, and vulcanisation accelerator are mixed to the mixture in this order.

In the following, the present invention is explained specifically on the basis of Examples.

### Preparation Examples 1 to 14

A 20 litre polymerisation reactor of stainless steel was purged with dry nitrogen and the, charged with 1420g of 1,3-butadiene, 580g of styrene, 15 ℓ of n-hexane, 195g of tetrahydrofuran and 8.7 mℓ if n-butyllithium (as n-hexane solution). Polymerisation was carried out at 65°C for 4 hours with agitation to obtain a polymer solution containing the styrene/butadiene rubber which is the diened polymer A having a alkali metal (lithium) active end. Into the polymer solution, the organosiloxane shown in Tables 1 and 2 was added such that the mole ration of n-butyllithium to the organisiloxane became 1, followed by reacting for 30 minutes with agitation. Then, 10 ml of methanol was added and agitation was continued for 5 minutes. Next, the reaction product in the reactor was taken our and 10g of 2,6-di-t-butyl-p-cresol (Sumilizer BHT available from Sumitomo Chemical Co Ltd) and 760 gram of aromatic oll (X-140 available from Kyodo Sekiyo Kabushiki Kaisha) were added thereto to obtain a mixture. After evaporating a large portion of the n-hexane through steam stripping, the mixture was dried under a reduced pressure at 50°C for 24 hours and about 2200g of organosiloxane-modified diene polymer was obtained.

Then, according to the mixing ratio shown in Table 2, the polymer, silica, carbon black, aromatic oil and silane coupling agent shown in Table 1 were admixed under the condition of 100° to 150°C using a 1.7 litre B-type Banbury mixer, followed by adding the vulcanisation assistant, wax and antioxidant at 130°C. Then, the vulcanising agent and vulcanisation accelerator were admixed by means of an 8-inch roller at a temperature of not higher then 100°C to obtain the rubber composition for a tyre tread.

The components employed in Preparation Examples as shown in Table 1.

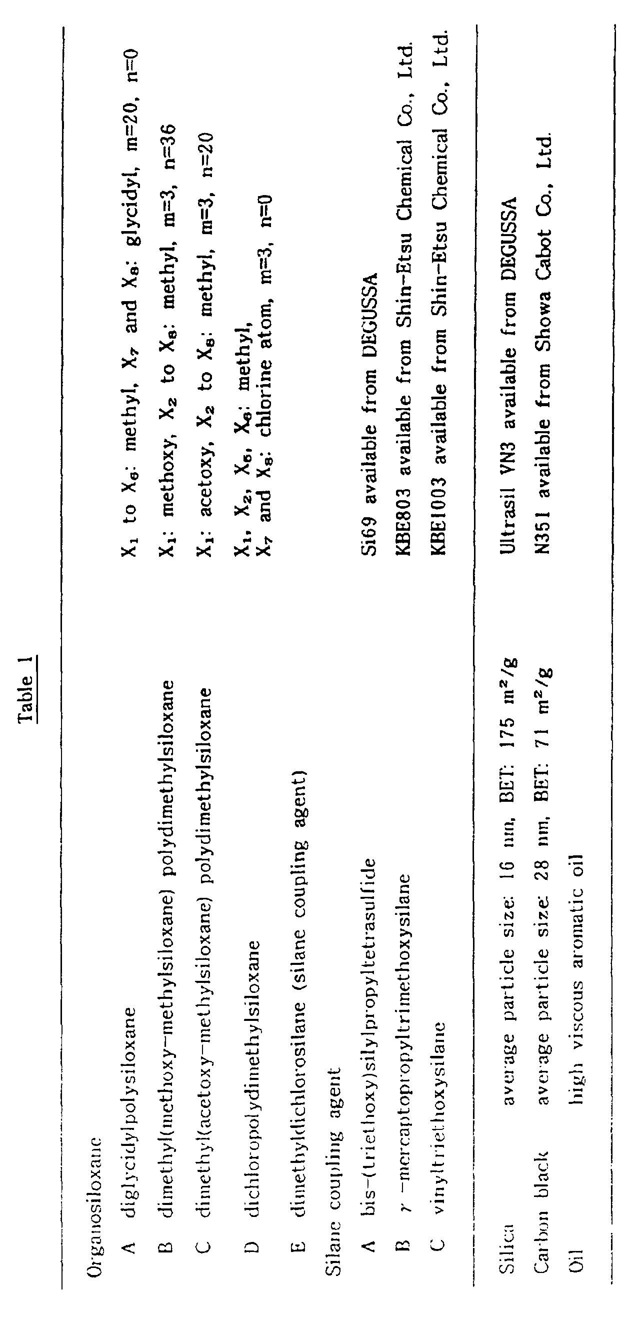

### Test Method

### Rolling Resistance

The rubber compositions were then measure for tan δ (hysterysis loss) at 70°C which represents the degree of rolling resistance under the conditions of 10 Hz of frequency, 10% of static stress and ± 1.0% of dynamic stress by means of a viscoelastic spectrometer as available from Kabushiki Kaisha Iwamoto Seisakusho. The results are shown as an index in Table 2. The tan δ of the rubber composition obtained from preparation Example 11 where dimethyldichlorosilane (silane coupling agent) was used instead of the organosiloxane was employed as the standard. In the following wet-skid resistance test, the standard was also the result of preparation Example 11. It is preferable that the index is low.

### Wet-skid resistance

To measure the wet-skid resistance of each rubber composition, a rubber sheet (2mm thickness) of each rubber composition was adhered to a tread portion and then vulcanised to prepare a tyre. The µ-S (S: slip ratio) of the tyre was measured by fitting the tyres to a traction bus and testing on the proving ground of Sumitomo Rubber Industries Ltd. in Okayama prefecture in Japan. The maximum µ was shown as an index to evaluate the wet-skid resistance. The results are shown in Table 2. The larger the index is, the more superior the wet-skid resistance was.

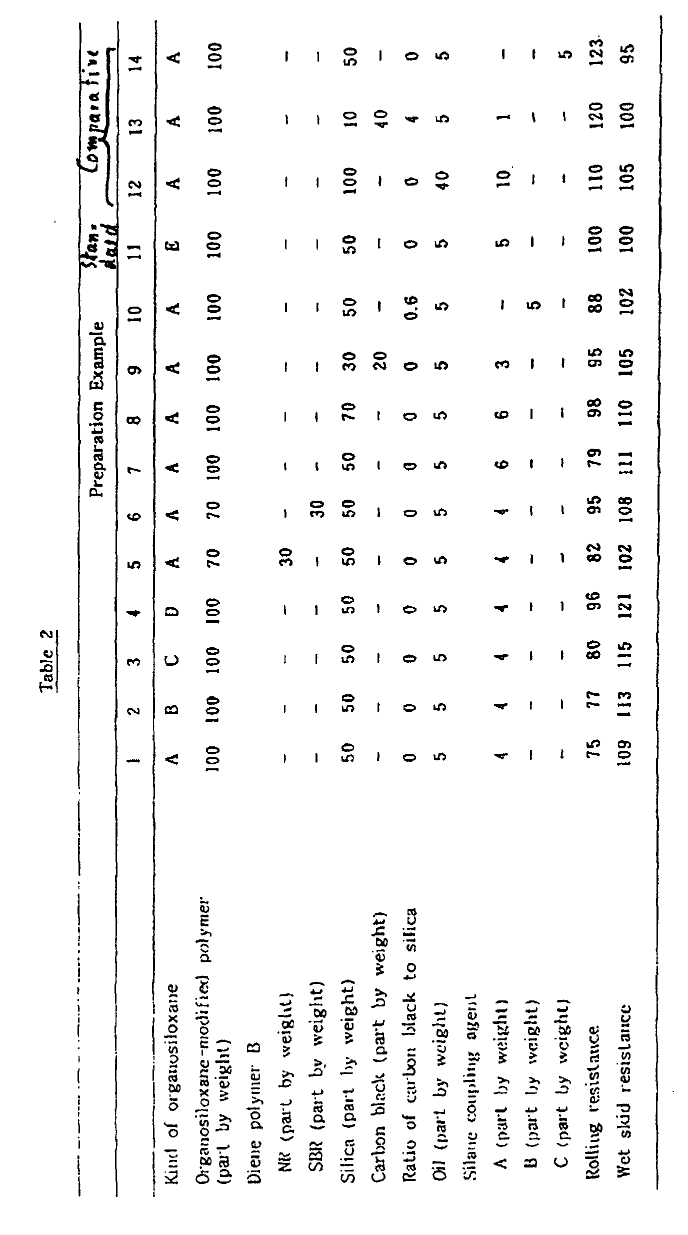

According to the present invention the amount of silane coupling agent was reduced as much as possible and the rubber composition containing the silica for a tyre tread was superior in processability and in the balance between low rolling resistance and high wet-skid resistance.

## Claims

1. A rubber composition for a tyre tread comprising
(1) 100 parts by weight of an organosiloxane-modified diene polymer or a blend of the organosiloxane-modified diene polymer with another diene polymer;
(2) 30 to 90 parts by weight of a silica or a mixture of the silica and 0 to 40 parts by weight of carbon black, wherein a weight ratio of the carbon black to the silica is not higher than 1.0; and
(3) a silane coupling agent in an amount of 5 to 15% by weight of the silica, wherein the silane coupling agent is bis-((triethoxy)silylpropyl)tetrasulfide or γ-mercaptopropyltrimethoxysilane,
said organosiloxane-modified diene polymer being obtained by:
(a) polymerising a diene monomer alone or a mixture of the diene monomer and an aromatic vinyl monomer by the use of an alkali metal-containing polymerisation initiator in a hydrocarbon solvent to give a diene polymer having an alkali metal-containing active end, and
(b) reacting the alkali metal-containing active end of the diene polymer with an organosiloxane having at least one functional group selected from the group consisting of epoxy, alkoxyl, carbonyl, vinyl, chloro, bromo and iodo groups,
wherein the organosiloxane is represented by the general formula (I) 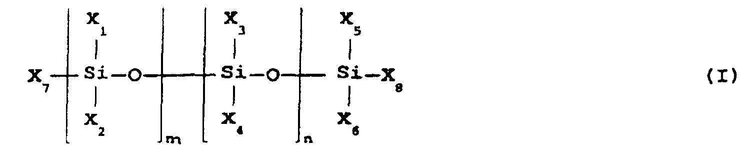 wherein X₁ to X₈ are the same or different and each is an alkoxy, vinyl, chloro, bromo or iodo group, a hydrocarbon residue having at least one of these groups, a hydrocarbon residue having an epoxy group, a hydrocarbon residue having a carbonyl, hydrogen atom, an alkyl or phenyl group, and each of m and n is an integer of 0 to 100, provided that m and n are not zero at the same time.

## Patentansprüche

1. Kautschukzusammensetzung für eine Reifenlauffläche mit:
(1) 100 Gewichtsteilen eines organosiloxan-modifizierten Dienpolymers oder einem Gemisch des organosiloxan-modifizierten Dienpolymers mit einem anderen Dienpolymer;
(2) 30 bis 90 Gewichtsteilen eines Silica oder einer Mischung des Silica und 0 bis 40 Gewichtsteilen Ruß, in der ein Gewichtsverhältnis des Rußes zu dem Silica nicht höher als 1,0 ist; und
(3) einem Silankupplungsmittel in einer Menge von 5 bis 15 Gew.-% des Silica, wobei das Silankupplungsmittel Bis-((triethoxy)silylpropyl)tetrasulfid oder γ-Mercaptopropyltrimethoxysilan ist,
wobei das organosiloxan-modifizierte Dienpolymer erhalten wird durch:
(a) Polymerisieren eines Dienmonomers allein oder einer Mischung des Dienmonomers und eines aromatischen Vinylmonomers durch Verwendung eines alkalimetallhaltigen Polymerisationsinitiators in einem Kohlenwasserstofflösemittel, um ein Dienpolymer mit einem alkalimetallhaltigen aktiven Ende zu ergeben, und
(b) Umsetzen des alkalimetallhaltigen aktiven Endes des Dienpolymers mit einem Organosiloxan mit wenigstens einer funktionellen Gruppe, ausgewählt aus der Gruppe, die aus Epoxy-, Alkoxy-, Carbonyl-, Vinyl-, Chlor-, Brom- und Iodgruppen besteht,
wobei das Organosiloxan durch die allgemeine Formel (I) dargestellt ist 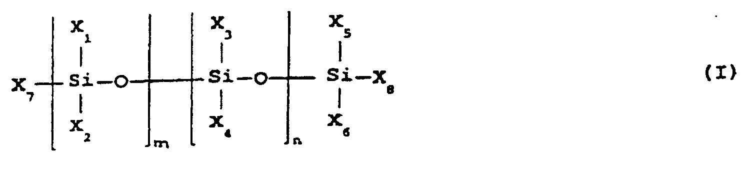 in der X₁ bis X₈, die gleich oder unterschiedlich sind, und jeweils eine Alkoxy-, Vinyl-, Chlor-, Brom- oder Iodgruppe, ein Kohlenwasserstoffrest mit wenigstens einer dieser Gruppen, ein Kohlenwasserstoffrest mit einer Epoxygruppe, ein Kohlenwasserstoffrest mit einer Carbonylgruppe, ein Wasserstoffatom, eine Alkyl- oder Phenylgruppe ist und m und n jeweils eine ganze Zahl von 0 bis 100 ist, vorausgesetzt, daß m und n nicht zur selben Zeit Null sind.

## Revendications

1. Composition de caoutchouc destinée à une bande de roulement de pneumatique, comprenant :
(1) 100 parties en poids d'un polymère de diène modifié par un organosiloxane ou un mélange du polymère de diène modifié par un organosiloxane avec un autre polymère de diène,
(2) 30 à 90 parties en poids de silice ou d'un mélange de silice et 0 à 40 parties en poids de noir de carbone, le rapport pondéral du noir de carbone à la silice ne dépassant pas 1,0, et
(3) un agent agent d'accrochage de silane en quantité comprise entre 5 et 15 % du poids de la silice, l'agent d'accrochage de silane étant le tétrasulfure de bis-(triéthoxy)silylpropyle ou le γ-mercaptopropyltriméthoxysilane,
le polymère de diène modifié par un organosilane étant obtenu par :
(a) polymérisation d'un diène monomère seul ou d'un mélange du diène monomère et d'un monomère vinylique aromatique, par utilisation d'un inducteur de polymérisation contenant un métal alcalin dans un solvant hydrocarboné pour l'obtention d'un polymère de diène ayant une extrémité active contenant un métal alcalin, et
(b) réaction de l'extrémité réactive contenant un métal alcalin du polymère de diène avec un organosiloxane ayant au moins un groupe fonctionnel choisi dans l'ensemble constitué par les groupes époxy, alcoxyle, carbonyle et vinyle et les atomes de chlore, de brome et diode,
dans laquelle l'organosiloxane est représenté par la formule générale (I) 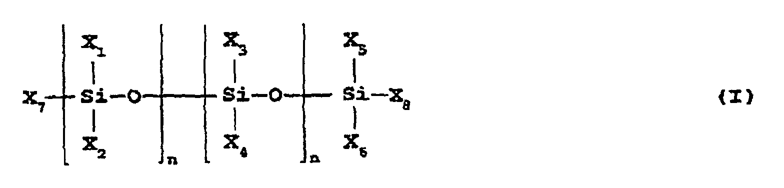 dans laquelle X₁ à X₈ sont identiques ou différents et représentent chacun un groupe alcoxy ou vinyle, ou un atome de chlore, de brome ou d'iode, un reste hydrocarboné ayant au moins un groupe alcoxy ou vinyle ou un atome de chlore, de brome ou d'iode, un reste hydrocarboné ayant un groupe époxy, un reste hydrocarboné ayant un groupe carbonyle, un atome d'hydrogène, un groupe alkyle ou phényle, chacun des paramètres m et n étant un nombre entier compris dans la plage de 0 à 100, pourvu que m et n ne soient pas nuls en même temps.
